# EUROPEAN PATENT APPLICATION

(11) **EP 3 995 294 A1**
(43) Date of publication of application: **11.05.2022**
(21) Application number: 21206139.4
(22) Date of filing: 03.11.2021
(51) Int. Cl.: B29C 65/18, B29C 65/74, A41D 19/00, B29L 31/48, B29K 23/00

(54) **METHOD AND PLANT FOR MANUFACTURING DISPOSABLE GLOVES**

(30) Priority: 04.11.2020 IT 202000026284
(71) Applicant: Mobert S.r.l., 21053 Castellanza VA (IT)
(72) Inventor: TONIATO, Maurizio, 21012 Cassano Magnago (Varese) (IT); TREZZI, Roberto, 20025 Legnano (Milano) (IT)
(74) Representative: Petruzziello, Aldo

(57) **Abstract**

Method for the production of disposable gloves in polyethylene or biodegradable materials comprising the following steps:
- longitudinal cutting of a film (21) consisting of two overlapping sheets so as to obtain two separate film strips or tracks (23), each with two overlapping faces (24, 25);
- feed with alternating START and STOP movement of the two strips of film (23) in a sealing unit (4) comprising two stations (40) for sealing gloves (100), one for each strip of film (23);
- transversal cutting of the strips of film (23) in proximity of the margin of the outline of the gloves (100) and collection in stacks (105) of the cut portions of film;
- transfer of the stacks (105) of film portions into a tear-off station, where the gloves (100) are separated from the outer part (110);
- optional packaging of the stacks of gloves; in which
said sealing stations (40) are designed to each seal at least two gloves (100) simultaneously; and
- said separation of the gloves (100) from the outer part (110) takes place by ejection from the inside of the film with a movement orthogonal with respect to the plane of the film, maintaining the outer part (110) still.

## Description

The present invention relates to a method and a plant for the production of disposable gloves made of polyethylene or biodegradable film.

The demand for disposable gloves made of plastic film, such as those used for example in the fruit and vegetable departments of supermarkets or at petrol stations, has increased considerably in recent months due to the spread of viruses at a pandemic level and the consequent need for greater hand hygiene.

Being considered a poor product, made of very thin film, and with the machines available on the market today being of low productivity, these gloves are almost entirely produced in Asian countries due to the low production costs.

The strong demand for this product has recently highlighted serious supply problems, and therefore the large commercial groups have sought out local producers, especially for gloves made from biodegradable film, due to problems linked to transport times and the consequent risk of degradation of the film, which at present makes it impossible to have these gloves made in Asian countries.

In addition to gloves made of biodegradable films, which represent the future trend, there is currently a considerable consumption of gloves made of non-degradable plastic film, especially in supermarkets.

There is therefore the need to enable manufacturers, particularly European ones, to produce gloves in both polyethylene and biodegradable materials at lower production costs than those at present. The only system that enables costs to be lowered is to increase the productivity of the glove production machines.

To date, the most advanced machines available on the market, working automatically on two parallel tracks, succeed in producing a maximum of 400 gloves per minute.

The limitation of these machines is mainly due to the way in which the gloves are extracted from the rectangular sheets into which they are shaped which, in the case of automatic machines, takes place by tearing the peripheral part of film that surrounds the shape outline of the glove. This means that only one glove can be shaped for each print on a strip of film.

The object of the present invention is to realise a machine that enables the productivity of the currently existing machines to be increased, possibly to reach and exceed the productivity of 1000 gloves per minute.

Another object of the invention is to enable the production of gloves in which the upper flaps of the mouth can be offset so as to facilitate the opening of the glove by the end user.

A further object of the invention is to enable the production of gloves packaged in boxes or collected in tear-off wads so that they can be hung on appropriate supports located in places of use.

These and other objects are achieved with the method and the plant for the production of disposable gloves according to the invention that have the features of the appended independent claims 1 and 6 respectively.

Advantageous embodiments of the invention are disclosed in the dependent claims.

Substantially, the method for producing disposable gloves in polyethylene or biodegradable materials according to the invention comprises the following steps:
- longitudinal cutting of a film consisting of two overlapping sheets so as to obtain two separate film strips or tracks, each with two overlapping faces;
- feed with alternating START and STOP movement of the two strips of film in a sealing unit comprising two glove sealing stations, one for each strip of film;
- transversal cutting of the film strips in proximity of the margin of the outline of the gloves and collection in stacks of the cut film portions;
- transfer of the stacks of film portions to a tear-off station, where the gloves are separated from the outer part;
- optional packaging of the stacks of gloves; wherein
- said sealing stations are designed to each seal at least two gloves (100) simultaneously; and
- said separation of the gloves (100) from the outer part (110) takes place by ejection from the inside of the film with a movement orthogonal with respect to the plane of the film, maintaining the outer part (110) stationary.

Further features of the invention will be made clearer by the following detailed description, referred solely to its purely illustrative and therefore non-limiting embodiments, illustrated in the accompanying drawings, in which:
Figures 1a, 1b, 1c are, respectively, a perspective view, a plan view from above and a side view, or rather in longitudinal section, of a plant for the production of gloves according to the invention;
Figure 2 is an enlarged plan view of the spreader and film cutting unit;
Figures 3a, 3b, 3c are three cross section views showing three successive working phases of a sealing station of the sealing unit; Figure 3d is a schematic plan view from above showing the outlines of the gloves obtained after sealing;
Figure 4 is an axonometric view of the glove extraction and packaging unit;
Figures 4a - 4d schematically show successive steps during extraction of the gloves;
Figures 5a to 5h are schematic views showing the various stages of production of gloves.

In the above drawings, identical or similar elements are identified by the same numerical references.

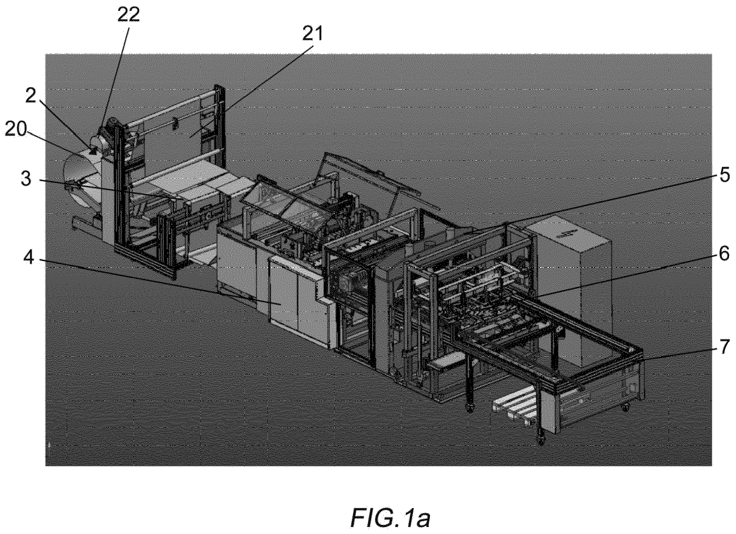

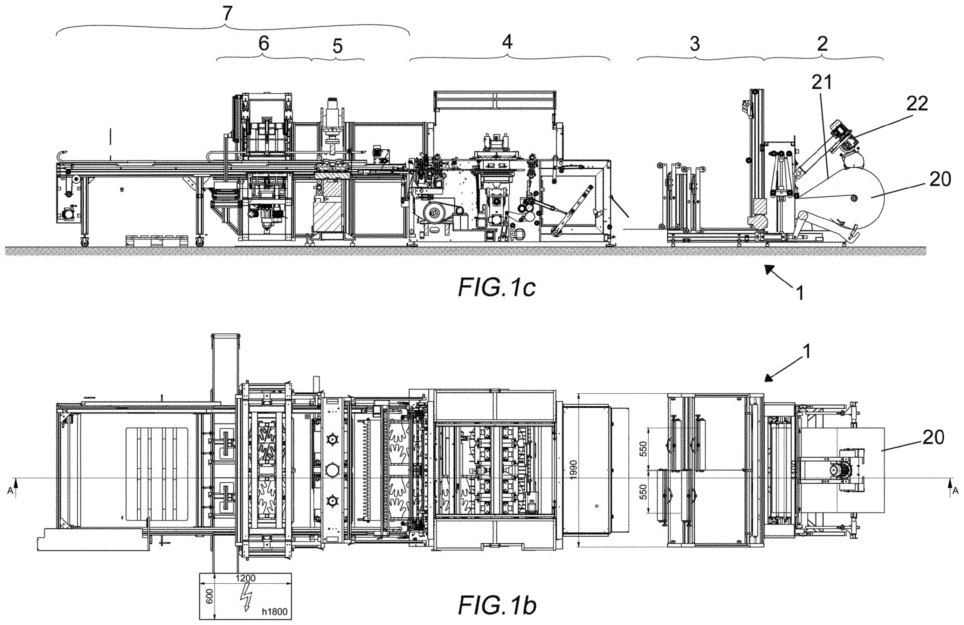

Figures 1a-1c schematically show a plant or machine (the two terms will be used indifferently in the present description) 1 for the production of gloves according to the invention from a tubular film, comprising, in its essential parts, a reel unwinding unit 2, a spreader and film cutting unit 3, a sealing unit 4, and an optional stacking unit 5, a gloves extraction and packaging unit 6, and a transfer carriage unit 7.

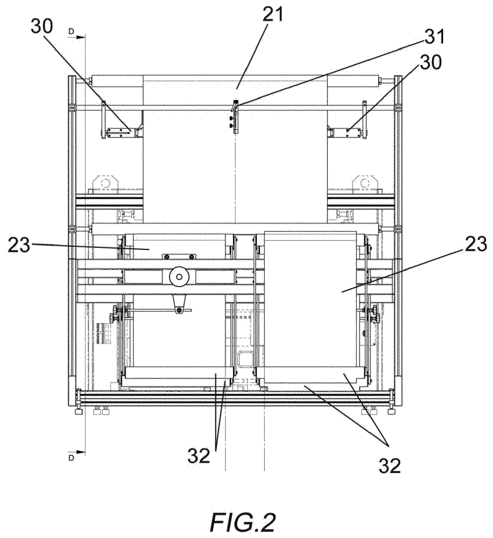

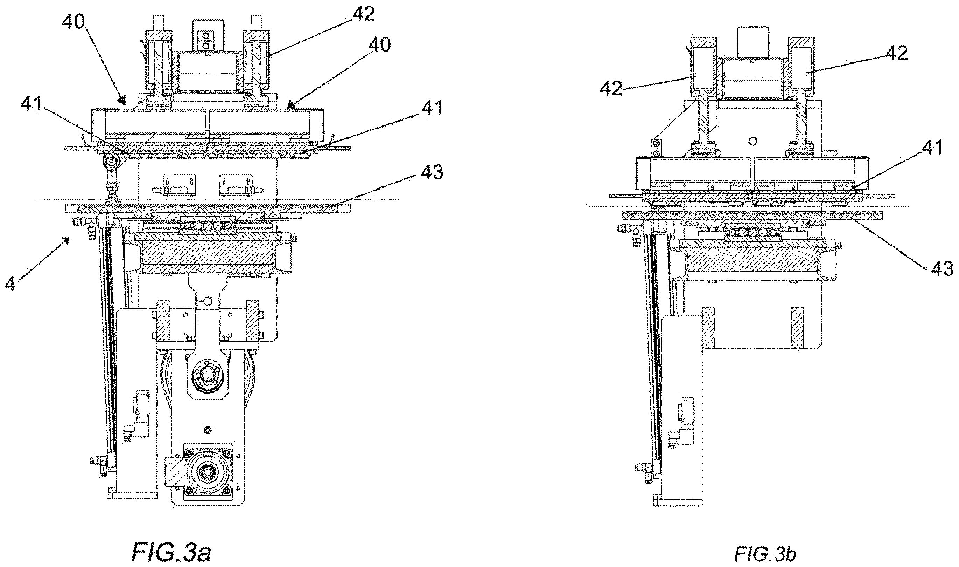

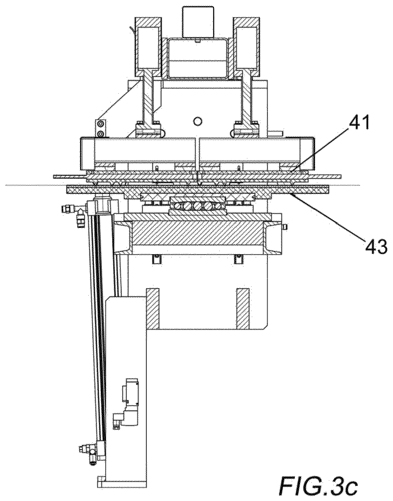

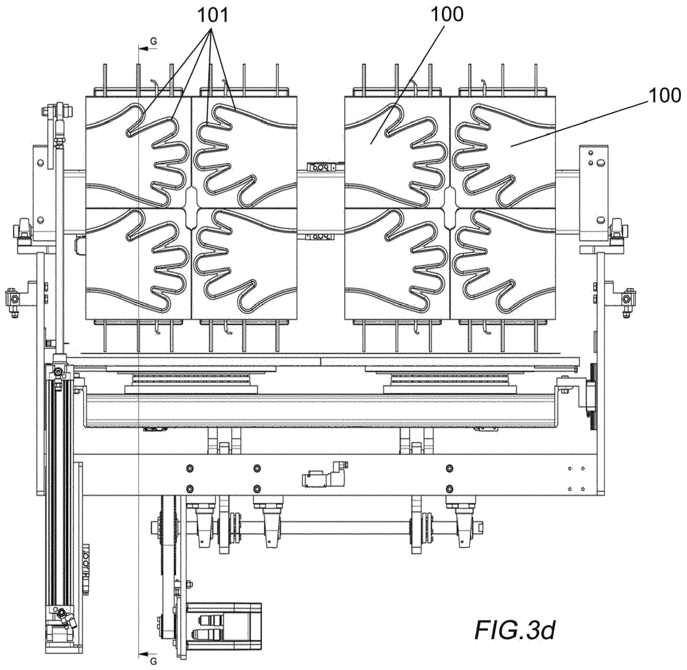

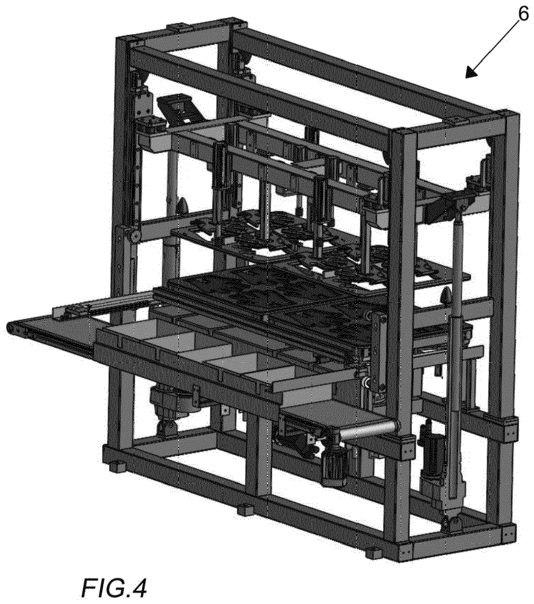

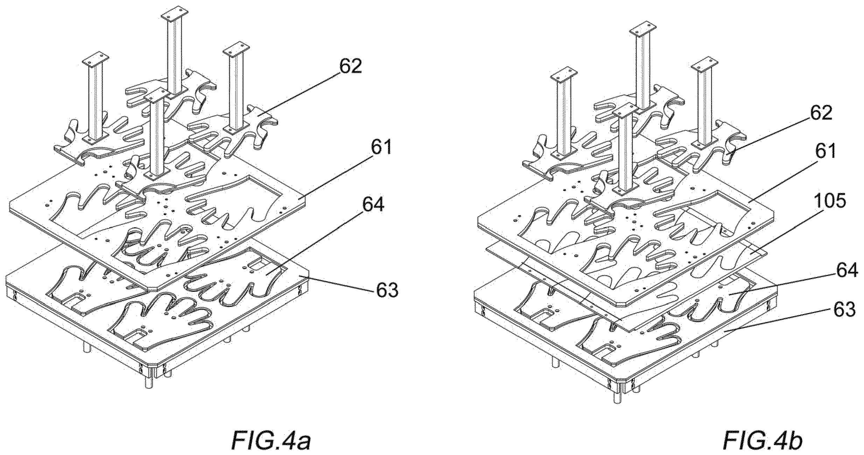

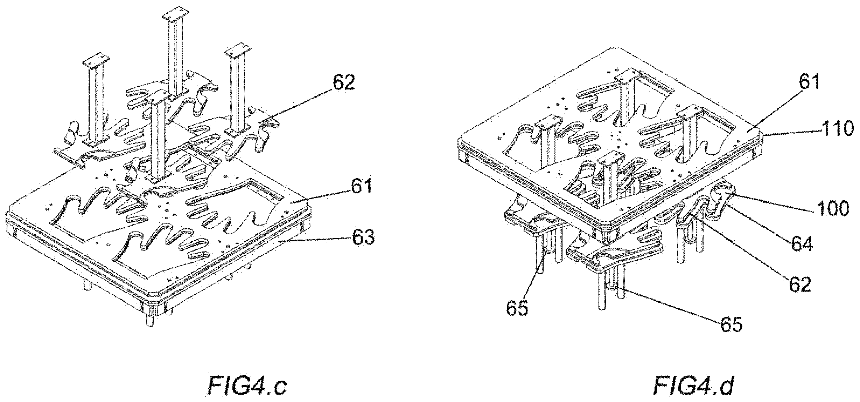

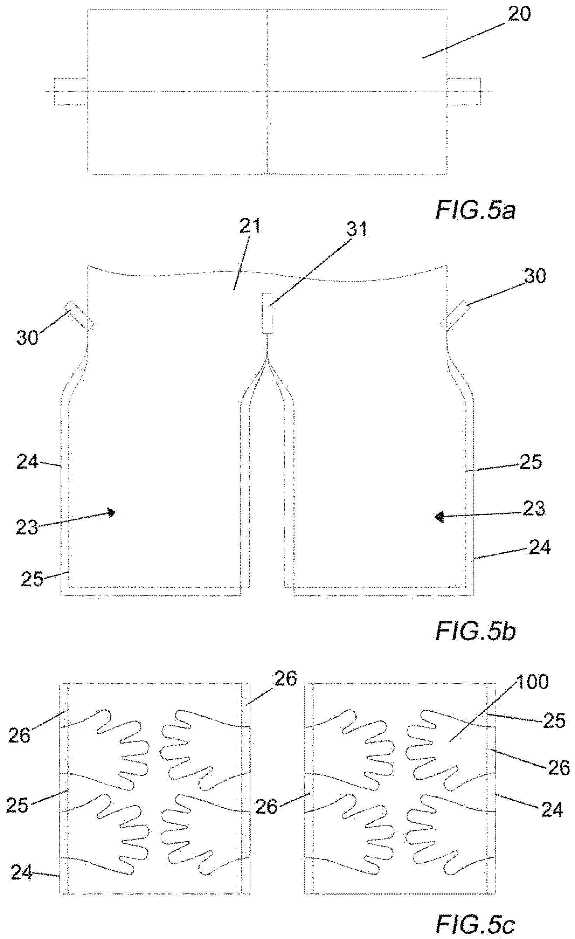

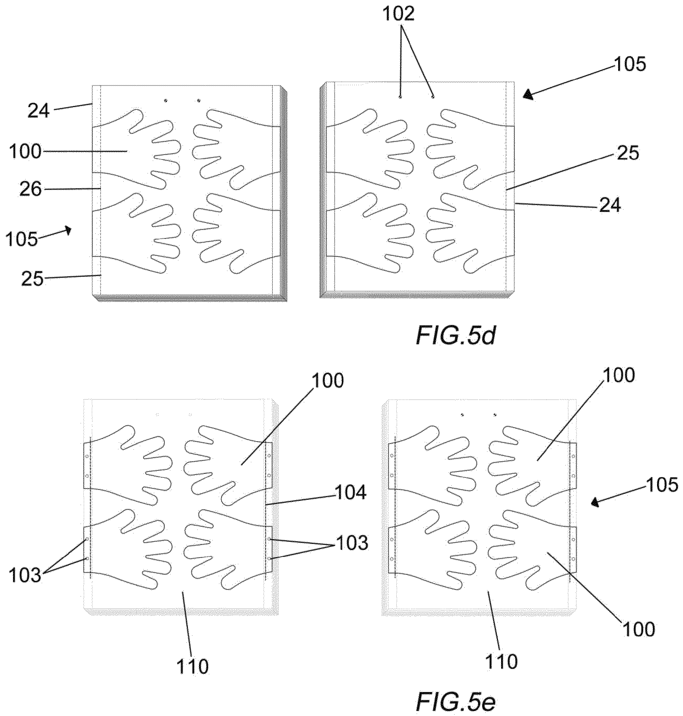

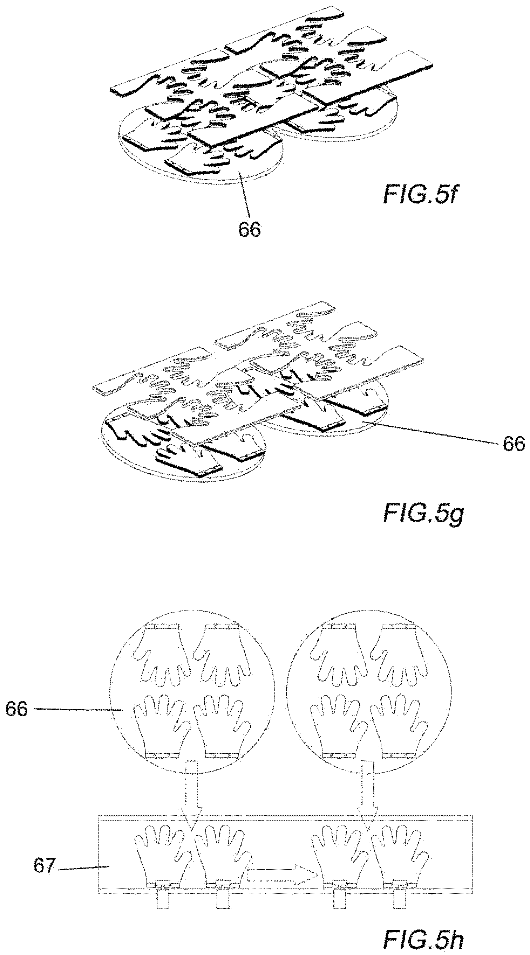

Here below, a description is given of the method for producing disposable gloves according to the invention, describing in greater detail the salient units of the machine that operate in the various steps.
1) The process starts with a reel 20 of tubular film 21, which is more readily available on the market. The unwinding of the reel 20 is controlled by means of a tangential motor drive unit 22. The film is then cut with two lateral knives 30 so as to obtain two overlapping sheets and then cut longitudinally by means of a blade 31 placed at the centre of the film so as to obtain two strips of film (which will also be referred to as tracks) each consisting of two overlapping sheets 24, 25 (see in particular Fig. 5b.). Obviously it would also be possible to start from two reels of single film that would then be overlapped and cut longitudinally by the central blade 31.
2) Each of the two faces 24, 25 of each film track 23 is made to pass over inclined rollers 32 (referred to as spreader rollers) that laterally offset the upper face 24 of each track from the lower face 25, by a portion of film that can be adjusted according to the size of the flap 26 that is to be obtained for each glove (Figs. 2 and 5b). Normally this offset will be approximately 25-30 mm.
3) The two strips of film 24, 25 enter the sealing unit, or sealing machine 4, upstream of which a dancer roller is placed that allows a continuous feed of the film from the unwinding reel 20 and an alternating START and STOP movement, which determines the forward movement of the film towards the sealing machine 4 by a length proportional to the width of two gloves, with reference to the number and to the arrangement of gloves schematised in the drawings (slightly longer with respect to the glove to facilitate the subsequent operation of transfer of the wad).
   Two glove sealing stations 40 are placed side by side one to the other in the area in which the film has an alternating movement of forward and stop. Each sealing station 40 is suitable for sealing four gloves simultaneously, arranged opposite each other in pairs as shown in the drawings. Naturally, the invention is not limited to the exemplified case of the production of four gloves per sealing station but covers a minimum of two gloves up to the maximum allowed by the dimensions of the machine. The outline of each glove, located in the upper part of the structure, is made from a heated and independently thermo-controlled plate 41 (there are therefore four plates that form a quadrilateral) so that the sealing temperature can be managed independently for each plate. The sealing outline is made so as to seal and simultaneously separate the outline of the glove 100 from the outer portion of the film, except for some small interruptions on the sealing outline, which perform the sealing but not the separation, allowing the glove to remain attached to the outer portion of the film by means of some joining points 101 (Fig. 3d). Naturally, in place of the joining points 101, a continuous incision line may be provided, which involves part of the thickness of the film, causing a weakening thereof, so as to allow subsequent separation.
   Each sealing plate 41 is independently supported by pneumatic cylinders 42 which, at the start-up of the machine (Fig. 3a), cause lowering thereof, bringing the dies closer and taking them to a distance from the film of approximately 10 mm (Fig. 3b).
   In the lower part of the structure two rotating discs 43 are placed to abut the sealing units (obviously only one shown in Figs. 3a, 3b, 3c), which are covered with silicone rubber and by a layer of insulating Teflon. Each disc abuts four glove outlines and has a diameter of about 700 mm. The two discs are supported by a mobile structure controlled by a servomotor which, at each stop of the film, lifts them by pushing them against the glove outline above (Fig. 3c). The film, which is interposed between the discs 43 and the sealing plates 41, is then accompanied against the latter determining the sealing of the outline of the glove 100. The pneumatic cylinders 42 carrying the sealing plates then perform a springing function, allowing each plate 41 of the glove to adapt autonomously to the plane of the disc which pushes them upwards by a few millimetres.
4) After sealing, the two adjacent portions of film that have been sealed are made to move forwards and taken to the collection station where the film is cut transversely in proximity of the edge of the outline of the gloves (Fig. 5c).
   As production proceeds, each subsequent portion of film is cut and overlapped with the portions already cut until the desired number of sheets is reached (Fig. 5d). The overlapping portions of film can be held together by means of hot sealing points 102, as schematically shown in Figure 5d, or by inserting them in appropriate needles, or again by means of clamping presses.
5) A transfer carriage equipped with grippers collects the two stacks 105 composed of the overlapping film portions and transfers them to an optional wadding station (if the aim is to produce wads of gloves that can be removed individually by tearing), where a press (which can be hydraulically or electromechanically actuated) equipped with eight series of two hot punches and knurling blades, descends onto the film in such a way that the punches and knurling blades act on each of the eight wads of gloves present inside the respective portions of film, producing, respectively, holes 103 with simultaneous sealing of the films to hold them together, and pre-cutting lines 104.
6) Once the optional wadding operation is completed, the transfer carriage carries the two stacks of sheets 105 into the extraction and tear-off station 6, shown in Figure 4, where the gloves 100 are extracted by separating them from the external part 110. As can be seen more clearly in the sequence of Figures 4a - 4d, in this station there are two upper pressers 61, 62 which descend onto the stack of sheets 105: a first external presser 61 goes to act on the part 110 external to the outline of the gloves 100 and a second internal presser 62 on the outline of the gloves 100.
   In the descent phase of the two pressers, the outer one 61 stops against a fixed abutment 63 pressing and holding still the outer portion 110 of the gloves, while the internal presser 62 encounters in the descent a movable counter-mould 64 which is held in position by pneumatic cylinders 65, and which is at the same level as the outer abutment 63, thus forming a single support plane. Continuing in its stroke, the inner abutment 62 grips the gloves and pushes downwards the inner counter-mould 64, tearing the gloves 100 from the outer part 110, as shown in Figure 4d.
7) When the presser 62 has come all the way down, the gloves will be completely separated from the outer part. Pneumatic grippers placed on the sides block the gloves thus allowing the upper presser to go up without the wads being broken up.
8) The lower presser 64 (which was pushed downwards during the glove ejection phase) is fixed on a rotating carousel 66 (Figure 5f). As a first operation, the carousel rotates through 90 degrees so that the mouth of the gloves is oriented towards the front of the line where another transfer carriage is located (Fig. 5g). The latter goes to staple the first four packs of gloves, waits for the pneumatic grippers to release the wads involved and transfers them onto a transfer belt 67 (Fig. 5h), (which could also carry boxes inside which the wads of gloves would be directly deposited). The carousel 66 then turns through 180 degrees presenting to the collection carriage the other four wads of gloves which will follow the same path as the previous ones.
9) At the same time, the transfer carriage, which had brought the stacks 105 onto the extraction station, continues its travel until depositing the waste (i.e. the waste outside the gloves) in a container intended for regeneration.

From what has been disclosed, the advantages of the method and of the plant according to the invention appear clear, which make it possible to obtain a high production capacity, thanks to the possibility of moulding several gloves simultaneously on each strip of film, due in particular to the method of extraction of the formed gloves by ejection from inside the film, with a movement orthogonal to the plane of the film, instead of by tearing outwards the external part of the glove, i.e. in a direction parallel to the plane of the film, as occurs in the prior art.

Naturally the invention is not limited to the particular embodiments previously described and illustrated in the accompanying drawings, but numerous detailed changes may be made thereto within the reach of the person skilled in the art, without thereby departing from the scope of the invention itself, as defined in the following claims.

## Claims

1. Method for manufacturing disposable gloves (100) in polyethylene or biodegradable materials comprising the following steps:
- longitudinal cutting of a film (21) consisting of two overlapping sheets so as to obtain two separate strips or tracks of film (23), each with two overlapping faces (24, 25);
- feed with alternating START and STOP movement of the two film strips (23) in a sealing unit (4) comprising two stations (40) for sealing of gloves (100), one for each film strip (23);
- transversal cutting of the film strips (23) in proximity of the margin of the outline of the gloves (100) and collecting of the cut film portions in stacks (105);
- transferring of the stacks (105) of film portions into a tear-off station, where the gloves (100) are separated from the external part (110);
- optional packaging of the stacks of gloves;
- **characterised in that**
- said sealing stations (40) are designed to each seal at least two gloves (100) at the same time;
- said separation of the gloves (100) from the external part (110) takes place through ejection from the inside of the film with an orthogonal movement with respect to the plane of the film, keeping the external part (110) still.

2. Method according to claim 1, wherein said overlapping sheets of the film (21) are obtained by trimming the longitudinal edges of a tubular material fed from a reel (20).

3. Method according to claim 1 or 2, **characterised in that** each strip of film (23) is made to pass over spreader rollers (32) which laterally offset the upper face (24) of each strip from the lower face (25), by a portion of film that can be adjusted according to the size of the flap (26) to be obtained for each glove.

4. Method according to any one of the preceding claims, **characterised in that** it also carries out the wadding of the stacks of film (105), with the provision of pre-cut lines (104) and holes (103) with simultaneous sealing of the film portions one to the other to hold them together, for the production of wads of individually removable tear-off gloves.

5. Method according to any one of the preceding claims, **characterised in that** each sealing station (40) is designed to seal four gloves simultaneously, arranged opposite one to the other in pairs.

6. Plant for the production of disposable gloves in polyethylene or biodegradable materials starting from a film (21) consisting of two overlapping sheets comprising:
- a cutting unit (3) provided with a blade (31) placed at the centre of the film to make a longitudinal cut of a film (21) so as to obtain two separate strips or tracks of film (23), each with two faces overlapping (24, 25);
- a sealing unit (4) comprising two stations (40) for sealing gloves (100), one for each strip of film (23);
- a station for transversally cutting the strips of film (23) in proximity of the margin of the glove outline (100) and collecting the cut film portions in stacks (105);
- a tear-off station (6) for separating the gloves (100) of the stacks (105) from the external part (110);
- an optional packaging station for the stacks of gloves;
- **characterised in that**
- each of said sealing stations (40) comprises at least two heated plates (41), each bearing the outline of a glove, and corresponding abutment elements (43) for the simultaneous sealing of at least two gloves;
- said tear-off station comprises two pressers (61, 62), a first external presser (61) acting on the outer part (110) of the outline of the gloves, locking it against a fixed abutment (63) and a second internal presser (62) acting against a mobile counter-presser (64) to cause the expulsion of the gloves (100).

7. Plant according to claim 6, **characterised in that** the sealing profile of said heated plates (41) is such as to seal and at the same time separate the profile of the glove (100) from the external portion (110) of the film, and has some small interruptions that perform the sealing but not the separation, allowing the glove to remain attached to the external part of the film through some junction points (101).

8. Plant according to claim 6 or 7, **characterised in that** said abutment elements (43) for the heated plates (41) are discs supported by a movable structure to push the film against said plates (41).

9. Plant according to any one of claims 6 to 8, **characterised in that** said mobile counter-presser (64) against which said internal presser (62) acts is held in position by pneumatic cylinders (65), and is at the same level as the external abutment (63), thus forming a single support surface.

10. Plant according to any one of claims 6 to 9, **characterised in that** said mobile counter-presser (64) is fixed on a revolving carousel (66).

11. Plant according to any one of claims 6 to 10, **characterised in that** it likewise provides a station (5) for wadding of the stacks of film (105), provided with a press equipped with hot punches and knurling blades producing, respectively, holes (103) with simultaneous sealing of the films to keep them together, and pre-cut lines (104), for the production of wads of individually removable tear-off gloves.
